Europäisches Patentamt

European Patent Office

Office européen des brevets

(11) Veröffentlichungsnummer: **0 380 164**
**A1**

## EUROPÄISCHE PATENTANMELDUNG

(21) Anmeldenummer: **90200124.7**

(22) Anmeldetag: **18.01.90**

(51) Int. Cl.5: **H04M 3/56**

(30) Priorität: **24.01.89 DE 3901909**

(43) Veröffentlichungstag der Anmeldung:
**01.08.90 Patentblatt 90/31**

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB**

(72) Erfinder: **Behrens, Michael, Dipl.-Ing.**
**Dientzenhofer Strasse 90**
**D-8500 Nürnberg 30(DE)**
Erfinder: **Czarnach, Roland, Dr.-Ing.**
**Blütenstrasse 48**
**D-8501 Eckental(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) Schaltungsanordnung zur Herstellung von Konferenzverbindungen mit einer Ringleitung.

(57) Es wird eine Schaltungsanordnung zur Herstellung von Konferenzverbindungen mit einer Ringleitung (L0, L1,...Ln; TE1, TE2,...TEn) beschrieben. In der Ringleitung läuft ein Summencodewort von einer Teilnehmereinheit (TE1, Te2,...TEn) zur nächsten um. Das Summencodewort besteht aus Abtastwerten der Signale (X1, X2,...Xn) aller Teilnehmer einer Konferenz. Jede Teilnehmereinheit (TE1, TE2,...TEn) enthält Mittel, mit denen ein Konferenzsignal für den ihr zugeordneten Teilnehmer durch Subtraktion des vorangegangenen Abtastwertes des Teilnehmersignales vom Summencodewort gebildet wird und Mittel, mit denen der augenblickliche Abtastwert des Teilnehmersignales zum Konferenzsignal des zugeordneten Teilnehmers hinzuaddiert wird. Damit mit einer derartigen Schaltungsanordnung mehrere Konferenzen gleichzeitig geführt werden können, ist vorgesehen, die Ringleitung mit Speichermitteln (Z) zu versehen, in denen die Summencodeworte unterschiedlicher Konferenzen bei ihrem Umlauf in der Ringleitung (L0, L1,...Ln; TE1, TE2,...TEn) zwischengespeichert werden und jede Teilnehmereinheit (TE1, TE2,...TEn) mit Mitteln zu versehen, mit denen an den zugeordneten Teilnehmer die Summe (Y1, Y2,...Yn) der Konferenzsignale vorbestimmter Konferenzen übertragen wird.

EP 0 380 164 A1

Lo

TE 1

E 1
x1

y1
A 1

L 1

Z

E 2
x2

TE 2

y2
A 2

L 2

E n
xn

TE n

yn
A n

Ln

Fig. 1

**Schaltungsanordnung zur Herstellung von Konferenzverbindungen mit einer Ringleitung**

Die Erfindung betrifft eine Schaltungsanordnung zur Herstellung von Konferenzverbindungen mit einer Ringleitung, in der
- ein Summencodewort von einer Teilnehmereinheit zu einer nächsten umläuft,
- das Summencodewort aus Abtastwerten der Signale aller Teilnehmer einer Konferenz gebildet ist,
- jede Teilnehmereinheit Mittel enthält, mit denen ein Konferenzsignal für den ihr zugeordneten Teilnehmer durch Subtraktion des vorangegangenen Abtastwertes des Teilnehmersignales vom Summencodewort gebildet wird, und
- jede Teilnehmereinheit Mittel enthält, mit denen der augenblickliche Abtastwert des Teilnehmersignales zum Konferenzsignal des zugeordneten Teilnehmers hinzuaddiert wird.

Eine derartige Schaltungsanordnung ist aus der DT 24 45 092 B1 bekannt. Solche Schaltungsanordnungen werden zum Beispiel für Audiokonferenzen oder für den akustischen Teil von Videokonferenzen benötigt. Mit der bekannten Schaltungsanordnung können jedoch nur Verbindungen zwischen den Teilnehmern einer Konferenz hergestellt werden. Es ist nicht vorgesehen, mit der gleichen Schaltungsanordnung z.B. zwei Konferenzen gleichzeitig durchzuführen, wobei die beiden Konferenzen nicht unabhängig voneinander zu sein brauchen. Im vorliegenden Zusammenhang bedeutet die Abhängigkeit zweier Konferenzen, daß es Teilnehmer gibt, die an beiden Konferenzen gleichzeitig teilnehmen. Ein solcher Fall liegt z.B. vor, wenn eine Konferenz in einer Sprache und eine weitere Konfe renz in einer anderen Sprache geführt werden soll. Ein Übersetzer muß in der Lage sein, an beiden Konferenzen zumindest eingeschränkt teilzunehmen. Eingeschränkt heißt zum Beispiel, daß er an der einen Konferenz nur als Hörer und an der anderen Konferenz nur als Sprecher teilnehmen kann.

Ausgehend von einer Schaltungsanordnung der eingangsgenannten Art liegt der Erfindung die Aufgabe zugrunde, die bekannte Anordnung derart zu verbessern, daß mehr als eine Konferenz gleichzeitig geführt werden kann und Teilnehmer vorgesehen werden können, die an mehr als an einer Konferenz eingeschränkt oder uneingeschränkt teilnehmen können.

Diese Aufgabe wird durch folgende Merkmale gelöst:

1.1. die Ringleitung enthält Speichermittel, in denen die Summencodeworte unterschiedlicher Konferenzen bei ihrem Umlauf in der Ringleitung zwischengespeichert werden,

1.2. jede Teilnehmereinheit enthält Mittel, mit denen an den zugeordneten Teilnehmer die Summe der Konferenzsignale vorbestimmter Konferenzen übertragen wird.

Die angegebene Lösung hat den Vorteil, daß die Zahl der Teilnehmer pro Konferenz ebenso wie die Zahl der unterschiedlichen Konferenzen frei wählbar sind, soweit es die Anzahl der zur Verfügung stehenden Teilnehmereinheiten zuläßt.

Vorteilhafte Ausgestaltungen sind in den Unteransprüchen enthalten.

Anhand der Figuren und anhand eines Ausführungsbeispieles soll die Erfindung näher erläutert werden.

Fig. 1 zeigt ein Prinzipschaltbild der Erfindung,

Fig. 2 zeigt eine Ausführungsform einer Teilnehmereinheit und

Fig. 3 zeigt eine verbesserte Ausführungsform der Teilnehmereinheit.

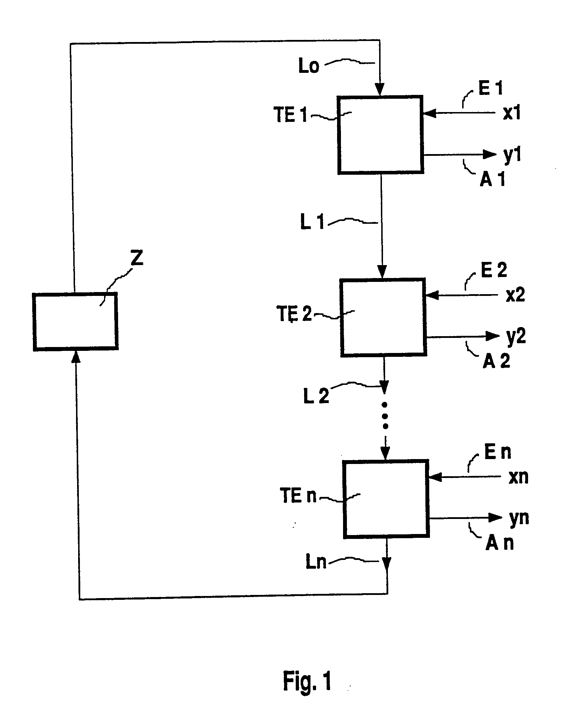

Im Prinzipschaltbild nach Fig. 1 wird eine Ringleitung aus Leitungsabschnitten L0, L1,...LN gebildet, die über Teilnehmereinheiten TE1, TE2...TEn und einen FIFO-Speicher Z miteinander verbunden sind. Auf der Ringleitung kreisen drei Summencodeworte C1, C2 und C3, die jeweils aus den Teilnehmersignalen x1, x2...xn der Teilnehmer dreier unterschiedlicher Konferenzen gebildet werden. Der Speicher Z enthält Speicherplätze für maximal drei Codeworte, da auch die Teilnehmereinheiten TE1, TE2...TEn Zwischenspeicher enthalten, und daher den Speicher Z an der angegebenen Stelle in Fig. 1 überflüssig machen können, wie weiter unten noch klarer zum Ausdruck kommen wird. Die Teilnehmersignale x1, x2...xn werden den Teilnehmereinheiten über Leitungen E1, E2...En zugeführt. Über Leitungen A1 bis An erhalten die Teilnehmer die für sie bestimmten Signale y1 bis yn.

Die Taktversorgung der Schaltungsanordnung nach Fig. 1 ist nicht mit eingetragen, auch nicht angedeutet, weil sie, - ebenso wie die Steuerung - keine besonderen Anforderungen an den Fachmann stellen.

Im erläuterten Beispiel führen sechs Teilnehmer die Konferenzen gleichzeitig. Für diesen Fall werden insgesamt sechs Teilnehmereinheiten TE1...TEn benötigt, deren Anzahl allein aus technologischen Gründen begrenzt ist, im vorliegenden Falle jedoch mindestens sechs betragen muß. Die Konferenzen werden über die Teilnehmereinheiten TE1, TE2... TE6 geführt. Die den Teilnehmereinheiten TE1 bis TE3 zugeordneten Teilnehmer führen die ersten Konferenzen, die den Teilnehmereinheiten TE4 bis TE6 zugeordneten die zweite Konferenz und die Teilnehmer, die an die Einheiten TE1, TE4 und TE5 angeschlossen sind, führen die dritte Konferenz. Die zuletzt erwähnten Teilnehmer sind also Teilnehmer zweier Konferenzen. Wird das Codewort C1 über den Leitungsabschnitt L0 an die Teilnehmereinheit TE1 gegeben, so wird in der Teilnehmereinheit TE1 zunächst vom Summencodewort C1 der erste Abtastwert x11 des Teilnehmersignales x1 subtrahiert, der dem Codewort C1 im vorangegangenen Umlauf hinzugefügt worden ist. Die Differenz C1-x11 enthält nun keine Anteile des Signales x1 mehr; sie ist ein Abtastwert des Konferenzsignales (Einzelkonferenzsignal) der ersten Konferenz für den ersten Teilnehmer. Diese Differenz wird - wie weiter unten noch deutlicher gezeigt wird - in einem Akkumulator zwischengespeichert. Sodann wird zur Differenz C1-x11 der augenblicklich auf der Leitung E1 anliegende Abtastwert x12 hinzuaddiert. Das so veränderte Summencodewort C1 wird auf dem Leitungsabschnitt L1 an die zweite Teilnehmereinrichtung TE2 übertragen. Hier wird das Codewort ein zweites Mal in entsprechender Weise verändert, da auch dieser Teilnehmer ein Teilnehmer der ersten Konferenz ist. In den Teilnehmereinrichtungen TE4, TE5 und TE6 wird das Codewort C1 nicht verändert, da die zugeordneten Teilnehmer nicht an der ersten Konferenz teilnehmen. Entsprechendes gilt auch für alle restlichen Teilnehmereinheiten.

In dem Augenblick, in dem das erste Codewort C1 von der letzten Teilnehmereinrichtung TEn über den Leitungsabschnitt Ln an den Speicher Z übergeben wird, übernimmt die Teilnehmereinheit TE1 das Codewort C2. Da der der Teilnehmereinheit TE1 zugeordnete Teilnehmer auch an der zweiten Konferenz teilnimmt, wird nun mit dem Summencodewort C2 genauso verfahren wie mit dem Summencodewort C1.

Im oben erwähnten Akkumulator ist nun die Summe der Differenzen C1-x11 und C2-x11 gespeichert. Diese Summe wird über den Ausgang A1 der Teilnehmereinheit TE1 als Gesamtkonferenzsignal y1 an den zugeordneten Teilnehmer übertragen. Aus der bisherigen Schilderung ergibt sich ohne weiteres die weitere Verarbeitung des Codewortes C2 und die des Codewortes C3.

Die Schilderung der Vorgänge in einer Schaltung nach Fig. 1 lassen erkennen, daß zwischen zwei Abtastzeitpunkten der Teilnehmersignale x1 bis x6 die drei Summencodeworte C1, C2 und C3 jeweils einmal umgelaufen sein müssen. Aus dieser Forderung ergeben sich für den Fachmann die Werte der in der Anordnung zu verwendenden Taktfrequenzen.

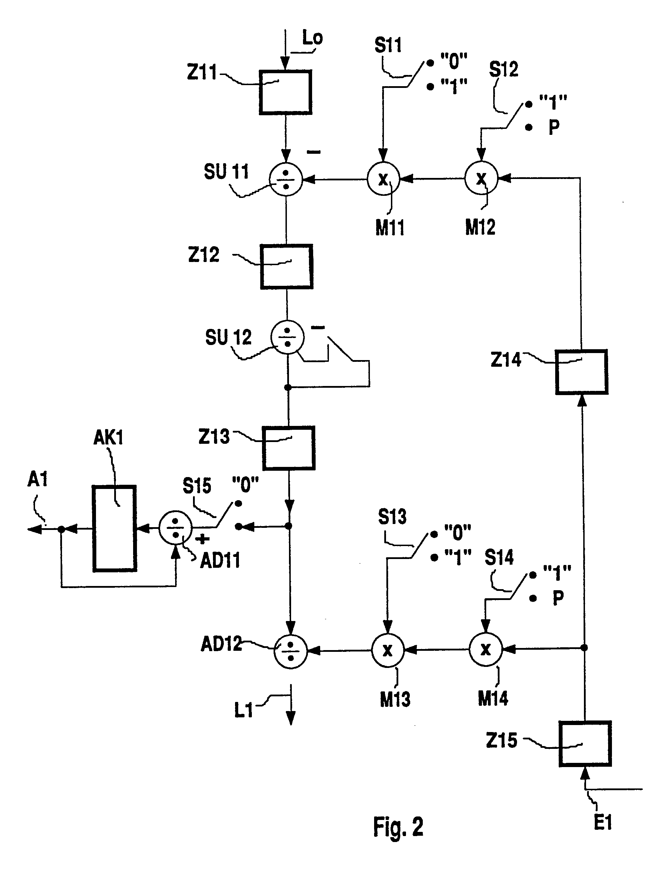

Fig. 2 zeigt den inneren Aufbau einer Teilnehmereinheit TEi (i = 1, 2...oder n). Die erste Ziffer in den Bezugzeichen für die Bausteine der beschriebenen Teilnehmereinheit bezieht sich auf die Nummer der Teilnehmereinheit und die zweite Ziffer bezieht sich auf die Bausteine innerhalb der Teilnehmereinheit. Der Einfachheit halber wird die erste Teilnehmereinheit TE1 beschrieben; alle anderen Teilnehmereinheiten sind auf die gleiche Weise aufgebaut.

Das über den Leitungsabschnitt L0 ankommende Summencodewort wird in einem Zwischenspeicher Z11 zwischengespeichert. Über einen Eingang E1 werden die Abtastwerte des zugeordneten Teilnehmers in Zwischenspeichern Z15 und Z14 ebenfalls zwischengespeichert. In diesen Speichern Z14 und Z15 befinden sich die Werte zweier aufeinanderfolgender Abtastwerte. Über Multiplizierer M11 und M12, deren Funktion ebenso wie die der Multiplizierer M13 und M14, weiter unten näher erläutert wird, gelangt der im Speicher Z14 zwischengespeicherte Abtastwert an den invertierenden Eingang eines Subtrahierers SU11. Das Ergebnis wird in einem Zwischenspeicher Z12 abgespeichert. Der Ausgang dieses Zwischenspeichers Z12 ist mit einem Eingang eines weiteren Subtrahierers SU12 verbunden, der die Funktion hat, zu Beginn einer Konferenz die kreisenden Summencodeworte zu löschen, da diese noch Informationen von vorangegangenen Konferenzen enthalten könnten. Der Ausgang des Subtrahierers SU12 ist über einen steuerbaren Schalter mit seinem invertierenden Eingang verbunden.

Die Steuersignale sowie die Steuereinrichtung für diesen Schalter und alle anderen steuerbaren Schalter S11, S12, S13 und S14 sind auch in Fig. 2 nicht eingezeichnet. Die Details der Steuerung der Schalter spielen bei der Erfindung eine untergeordnete Rolle. Aus der Schilderung der Funktion und des Zusammenwirkens aller Bauteile ergibt sich für den Fachmann von selbst, mit welchen Hilfsmitteln, zu welchen Zeitpunkten und unter welchen Bedingungen Schalter geöffnet oder geschlossen werden müssen.

Nach Ablauf der Anfangsphase einer Konferenz enthält der Zwischenspeicher Z12 sowie ein ihm nachgeschaltete Zwischenspeicher Z13 einen Abtastwert eines Einzelkonferenzsignales für den Teilnehmer, der der ersten Teilnehmereinrichtung TE1 zugeordnet ist. Ein Einzelkonferenzsignal für einen Teilnehmer enthält keine Eigenanteile, sondern besteht nur aus Signalanteilen aller anderen Teilnehmer einer einzigen Konferenz. Über einen steuerbaren Schalter S15 wird der im Speicher Z13 gespeicherte Abtastwert über einen Addierer AD11 an einen mit ihm rückgekoppelten Akkumulator AK1 weitergegeben. Im Akkumulator AK1 werden die Abtastwerte der Einzelkonferenzsignale aufsummiert, die für den ersten Teilnehmer bestimmt sind. Die Steuerung erfolgt - wie schon angedeutet - über den Schalter S15. Die Summe, dieser Abtastwerte, wird dem Teilnehmer über einen Ausgang A1 übermittelt; danach wird der Akkumulator AK1 gelöscht.

Der Inhalt des Speichers Z13 wird auch an einen Eingang eines zweiten Addierers AD12 geleitet. An dessen zweiten Eingang gelangt der augenblickliche Abtastwert des Signales x1, der im Speicher Z15 gespeichert ist. Die Ausgangsleitung des Addierers AD12 bildet gleichzeitig den Abschnitt L1 der Ringleitung. Über ihn wird das veränderte Codwort C1 an die Teilnehmereinheit TE2 weitergegeben. Die steuerbaren Schalter S11 und S13 einerseits sowie die steuerbaren Schalter S12 und S14 andererseits werden synchron gesteuert. Stehen die beidenSchalter S11 und S13 in der Stellung "0", so nimmt der zugeordnete Teilnehmer als Sprecher nicht an der Konferenz teil. Steht gleichzeitig der Schalter S15 auf der Stellung "0", so nimmt der zugeordnete Teilnehmer auch als Hörer nicht an der Konferenz teil. Die Schalter S11, S13 und S15 lassen daher folgende Betriebsarten zu:

a) der zugeordnete Teilnehmer nimmt nur als Hörer teil,

b) der zugeordnete Teilnehmer nimmt nur als Sprecher teil,

c) der zugeordnete Teilnehmer nimmt als Hörer und Sprecher teil,

d) der zugeordnete Teilnehmer nimmt überhaupt nicht teil.

Jede dieser Betriebsarten kann durch Steuerung der Schalter für jede der gleichzeitig geführten Konferenzen eingestellt werden. Die bisherige Darstellung des Ausführungsbeispieles läßt auch erkennen, daß die Funktion des Speichers Z der Figur 1 ganz oder teilweise von den Zwischenspeichern Z11, Z12 und Z13 übernommen werden kann.

Die Schalter S12 und S14 mit den zugehörigen Multiplizie rern M12 und M14 haben folgende Bedeutung:

Ist S12 bzw. S14 in der Stellung "1", so ist der zugeordnete Teilnehmer mit allen anderen Konferenzteilnehmern gleichberechtigt. Stehen die Schalter dagegen in der Stellung P, so wird sein Signal um den Faktor P verstärkt. Da jedoch in die Ausgangsleitungen A1 bis An eine - nicht eingezeichnete - Waage eingefügt ist (vergleiche hierzu die DE 38 39 627), die den Gesamtpegel der im Akkumulator AK2 bis AKn gespeicherte Summe aller Konferenzsignale derart dämpft, daß sie unter einem vorgegebenen Pegel liegt, ist im Signal hinter der Waage praktisch nur der der Teilnehmereinrichtung TE1 zugeordnete Teilnehmer zu hören, sofern er seine SchalterS12 und S14 in die Stellung P gebracht hat. Eine solche Betriebsart wird immer dann gewählt werden, wenn bei einer Konferenz - wegen chaotischer Beiträge der Konferenzteilnehmer - der Leiter nicht mehr in der Lage ist, sich gegenüber allen anderen Teilnehmern durchzusetzen. Für solche Fälle hat er und nur er die Möglichkeit, die Schalter S12 und S14 in die Stellung P zu bringen.

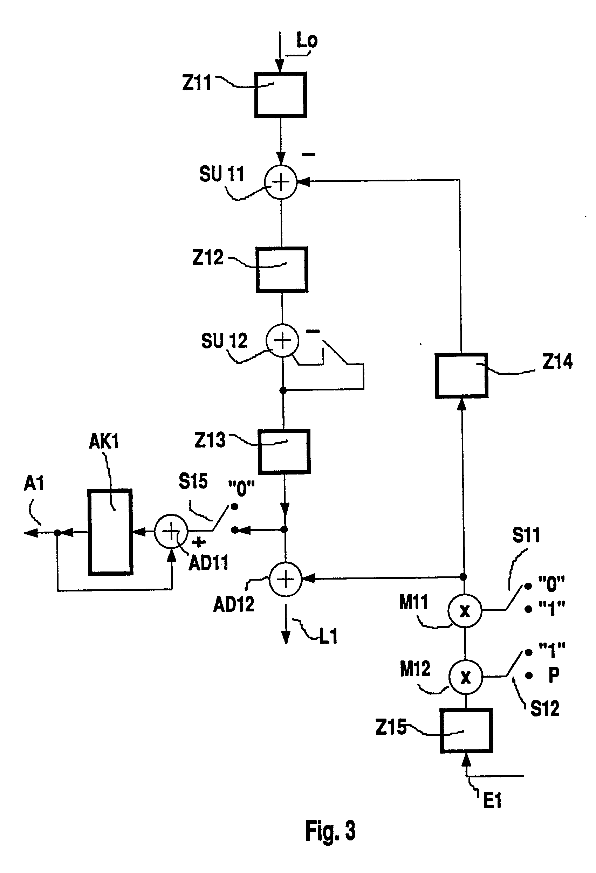

Fig. 3 zeigt eine verbesserte Ausführungsform der Teilnehmereinheit TE1. Durch sie werden zwei Schalter und zwei Multiplizierer eingespart. Im übrigen haben alle in Fig. 3 angeführten Bauteile die gleichen Bezugszeichen wie die in Fig. 2, sofern sie auch die gleiche Funktion haben. In der Ausführungsform nach Fig. 3 sind zwei Multiplizierer M11 und M12 in die Verbindungsleitung zwischen den beiden Speichern Z15 und Z14 gelegt. Die Multiplizierer M11 und M12 liegen vor der Abzweigung zum Addierer AD12. Mit einem einzigen Schalter S11 läßt sich der zugeordnete Teilnehmer als Sprecher abschalten. Entsprechendes gilt für den einzigen Schalter S12, mit dem die oben geschilderte Priorität des zugeordneten Teilnehmers ein- bzw. ausgeschaltet werden kann.

**Ansprüche**

1. Schaltungsanordnung zur Herstellung von Konferenzverbindungen mit einer Ringleitung (L0, L1,...Ln; TE1, Te2,...TEn), in der

- ein Summencodewort von einer Teilnehmereinheit (TE1, TE2,...TEn) zu einer nächsten umläuft,
- das Summencodewort aus Abtastwerten der Signale aller Teilnehmer einer Konferenz gebildet ist,
- jede Teilnehmereinheit (TE1, TE2....TEn) Mittel enthält, mit denen ein Konferenzsignal für den zugeordneten Teilnehmer durch Subtraktion des vorangegangenen Abtastwertes des Teilnehmersignales (x1, x2,...xn) vom Summencodewort gebildet wird, und
- jede Teilnehmereinheit (TE1, TE2...TEn) Mittel enthält, mit denen der augenblickliche Abtastwert des Teilnehmersignales (x1, x2....xn) zum Konferenzsignal des zugeordneten Teilnehmers hinzuaddiert wird, gekennzeichnet durch folgende Merkmale:

1.1. die Ringleitung (L0, L1,...Ln; TE1, TE2,...TEn) enthält Speichermittel (Z), in denen die Summencodeworte unterschiedlicher Konferenzen bei ihrem Umlauf in der Ringleitung (L0, L1,...Ln; TE1, TE2,...TEn) zwischengespeichert werden,

1.2. jede Teilnehmereinheit (TE1, TE2,...TEn) enthält Mittel, mit denen an den zugeordneten Teilnehmer die Summe (y1, y2...yn) der Konferenzsignale vorbestimmter Konferenzen übertragen wird.

2. Teilnehmereinheit zur Verwendung in einer Schaltung nach Anspruch 1, dadurch gekennzeichnet, daß sie Mittel enthält, mit denen an den zugeordneten Teilnehmer die Summe (Y1, Y2...Yn) der Konferenzsignale vorbestimmter Konferenzen übertragen wird.

3. Teilnehmereinheit nach Anspruch 2, dadurch gekennzeichnet, daß sie Mittel (M12, S12, M14, S14) enthält, mit denen das Teilnehmersignal (X1, X2...Xn) im Bedarfsfall um den Faktor (P) verstärkt wird.

4. Teilnehmereinheit nach Anspruch 2 oder 3,
dadurch gekennzeichnet,
daß sie Mittel (M11, S11, M13, S13) enthält, mit denen die Übertragung der Abtastwerte des Teilnehmersignals zur Ringleitung im Bedarfsfall unterbrochen wird.

5. Teilnehmereinheit nach einem der Ansprüche 2 bis 4,
dadurch gekennzeichnet,
daß sie Mittel (S15) enthält, mit denen die Übertragung von Konferenzsignalen an den zugeordneten Teilnehmer im Bedarfsfall unterbrochen wird.

Fig. 1

Fig. 2

Fig. 3

Europäisches Patentamt

**EUROPÄISCHER RECHERCHENBERICHT**

Nummer der Anmeldung

EP 90 20 0124

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 061 670 (REED) <br> * Figur 1; Seite 2, Zeilen 15-47; Seite 5, Zeilen 31-41 * <br> --- | 1,2 | H 04 M 3/56 |
| A | PATENT ABSTRACTS OF JAPAN, Band 9, Nr. 85 (E-308)[1808], 13. April 1985; & JP-A-59 216 361 (MITSUBISHI DENKI K.K.) 06-12-1984 <br> * Insgesamt * <br> --- | 3 | |
| A | EP-A-0 004 182 (THE POST OFFICE) <br> * Seite 7, Zeilen 9-17 * <br> --- | 3 | |
| A | US-A-4 150 259 (FENTON et al.) <br> * Zusammenfassung * <br> ----- | 4,5 | |

| RECHERCHIERTE SACHGEBIETE (Int. Cl.5) |
|---|
| H 04 M |

Der vorliegende Recherchenbericht wurde für alle Patentansprüche erstellt

| Recherchenort | Abschlußdatum der Recherche | Prüfer |
|---|---|---|
| DEN HAAG | 09-04-1990 | BISCHOF J.L.A. |